# EUROPÄISCHE PATENTSCHRIFT

(11) **EP 1 591 000 B1**
(45) Veröffentlichungstag und Bekanntmachung des Hinweises auf die Patenterteilung: **10.10.2007**
(21) Anmeldenummer: 05102774.6
(22) Anmeldetag: 08.04.2005
(51) Int. Cl.: A01C 7/08

(54) **Zuführsystem für landwirtschaftliche Produkte**
Delivery system for agricultural products
Système de delivrance pour produits agricoles

(30) Priorität: 26.04.2004 US 832093
(43) Veröffentlichungstag der Anmeldung: 02.11.2005
(73) Patentinhaber: DEERE & COMPANY, Moline, Illinois 61265-8098 (US)
(72) Erfinder: Mariman, Nathan Albert, 61254, Geneseo (US); Hagen, Mattew Brian, 52722, Bettendorf (US); Myers, Christopher Allen, 61265, Moline (US)
(74) Vertreter: Holst, Sönke

(56) Entgegenhaltungen:
- CA-A1- 2 219 230
- DE-A1- 19 833 691
- US-A- 5 927 217
- US-A- 6 047 652

## Beschreibung

Die Erfindung betrifft ein Zuführsystem für landwirtschaftliches Produkt, insbesondere für Saatgut, mit einem Rahmen, einem am Rahmen montierten ersten Hauptbehälter, einem am Rahmen montierten zweiten Hauptbehälter, wobei jeder der Hauptbehälter eine Düsenanordnung mit einer Eintrittsöffnung für Produkte aufweist, in die das Produkt aus dem entsprechenden Hauptbehälter geleitet wird und wobei die Düsenanordnung einen Lufteinlass zum Einleiten von Druckluft und einen Produktauslass zum Abführen von Druckluft und aufgenommenem Produkt aufweist, einer ersten am Rahmen montierten Ausbringeinheit und einer zweiten am Rahmen montierten Ausbringeinheit, wobei jede Ausbringeinheit eine Dosiervorrichtung zum Ausbringen von Produkt auf ein Feld aufweist und wobei die Dosiervorrichtung der ersten Ausbringeinheit mit dem ersten Hauptbehälter und die Dosiervorrichtung der zweiten Ausbringeinheit mit dem zweiten Hauptbehälter in Verbindung steht, einer mit dem Lufteinlass der Düsenanordnung des ersten Hauptbehälters in Strömungsverbindung stehenden ersten Druckluftquelle und einer mit dem Lufteinlass der Düsenanordnung des zweiten Hauptbehälters in Strömungsverbindung stehenden zweiten Druckluftquelle.

An landwirtschaftlichen Sämaschinen werden pneumatische Zuführsysteme eingesetzt, um aus einem Saatguthauptbehälter das Saatgut automatisch zu einer Vielzahl von einzelnen Pflanzeinheiten zu befördern. Jede der einzelnen Pflanzeinheiten weist einen zusätzlichen Hilfsbehälter, zur Aufnahme des Saatguts, eine Dosiervorrichtung, zur Dosierung des Saatguts aus dem Hilfsbehälter, und einen Furchenöffner auf, zum Formen einer Pflanzfurche, in welche das dosierte Saatgut abgelegt wird. Um Druckluft zu schaffen, mit der ein Luftstrom erzeugt wird, der das Saatgut zu den Pflanzeinheiten befördert, wird ein Gebläse eingesetzt. Derartige Systeme füllen die Hilfsbehälter bei Bedarf automatisch wieder auf.

Die im Handel erhältlichen Zuführsysteme benötigen normalerweise ein großes Gebläse um den Luftstrom zu bilden. Ein großes Gebläse ist erforderlich, weil hohe Druckverluste im pneumatischen System aufgrund von abrupten Richtungswechsel des Luftstroms im Saatguthauptbehälter auftreten.

Ein weiteres System wird in der US 6,609,468 A1 offenbart. Das dort offenbarte Zuführsystem ist derart ausgebildet, dass der durch den Saatguthauptbehälter geführte Luftstrom nicht diesen abrupten Richtungswechseln ausgesetzt ist. Dieses Zuführsystem weist einen Rahmen mit einem Saatguthauptbehälter und eine Ausbringeinheit auf. Ein Gebläse leitet Druckluft in einen Verteiler, in dem die Druckluft in eine Vielzahl von Luftversorgungsschläuchen verteilt wird. Die Luftversorgungsschläuche sind mit Lufteinlässen verbunden, die auf dem Boden des Saatguthauptbehälters angeordnet sind. Gegenüber den Lufteinlässen sind entsprechende Produktauslässe angeordnet, in denen der Luftstrom mit den darin aufgenommenen Produkten, wie z. B. Saatgut, aufgenommen wird. Die Produktauslässe sind mit Zuführschläuchen verbunden, welche wiederum mit den an den Ausbringeinheiten positionierten Hilfsbehältern verbunden sind. Der Boden des Saatguthauptbehälters ist gewölbt ausgebildet und weist nach außen auseinander laufende Seitenwände auf. Der Lufteinlass ist relativ zum Boden nach unten gerichtet und der Produktauslass nach oben gerichtet angewinkelt.

Über den entsprechenden Lufteinlässen und Produktauslässen sind spitz zulaufende Blenden angeordnet, so dass sich unterhalb der Blenden Produktanhäufungen bilden. Zwischen nebeneinander liegenden Blenden sind Zwischenräume angeordnet, so dass Produkt aus dem Saatguthauptbehälter zu den Produktanhäufungen fließen kann.

Das oben genannte Zuführsystem kann eingesetzt werden, um Saatgut aus einem Hauptbehälter zu Hilfsbehälter zu befördern, die an Pflanzeinheiten angeordnet sind. Die Pflanzeinheit umfasst Hilfsbehälter welche jeweils eine entsprechende Dosiervorrichtung mit Saatgut versorgen, von denen eine jede dosiertes Saatgut in eine von einem Furchenöffner ausgebildete Pflanzfurche abgibt.

Üblicherweise wird in Druckluftzuführsystemen für Saatgut ein herkömmliches Gebläse eingesetzt, um die gesamte Pflanzmaschine mit Druckluft zu versorgen. In einem herkömmlichen Druckluftzuführsystem für eine Massen-Sämaschine, welches eine Vielzahl von Arbeitseinheiten versorgt, ist ein Mindestdruck für die Druckluft erforderlich, um auch die weiter entfernt vom Saatguthauptbehälter oder Tank gelegenen Reihen-Arbeitseinheiten ausreichend mit Saatgut versorgen zu können. Das Gebläse bringt einen solchen Druck auf, um sicherzustellen, dass für alle Arbeitseinheiten eine angemessene Saatgutzuführung erfolgt. Auf Grund dessen kann es eintreten, dass die am nächsten gelegene Reihen-Arbeitseinheit, welche durch kürzere Zuführschläuche versorgt wird, größeren Volumenströmen oder höheren Drücken ausgesetzt ist. Es ist schwierig zu verhindern, dass die am nächsten gelegenen Reihen-Arbeitseinheiten überfüllt werden.

Die US 6,047,652 A1 offenbart ein Zuführsystem für eine Sämaschine, mit dem Saatgut aus einem ersten und einem zweiten Saatguthauptbehälter in mehrere Arbeitseinheiten zum Aussäen des Saatguts geleitet wird, wobei es sich hierbei um ein pneumatisches System handelt. Das Saatgut wird über am Saatguthauptbehälter angeordnete Saatgutverteiler, sowie einer Vielzahl von Saatgutschläuchen mittels durch Gebläse erzeugten Luftdrucks an die verschiedenen Arbeitseinheiten verteilt bzw. diesen zugeführt. Die Arbeitseinheiten weisen unterschiedliche Abstände zu den Saatguthauptbehältern auf, so dass sich auch hier nachteilig die oben geschilderten Probleme auswirken.

Die der Erfindung zugrunde liegende Aufgabe wird darin gesehen, ein Zuführsystem der eingangs genannten Art anzugeben, durch welches die vorgenannten Probleme überwunden werden. Insbesondere ist ein Zuführsystem zu schaffen, welches mehrere Arbeitseinheiten mit einem Produkt versorgt und eine korrekte Menge an Produkt aus dem Saatguthauptbehälter sowohl den nahe gelegenen als auch den fern gelegenen Arbeitseinheiten zuführt. Des Weiteren soll die Eintrittswahrscheinlichkeit von Überfüllung und Verstopfung verringert werden. Ferner soll ein gleichzeitiges Zuführen verschiedener Produkte an verschiedene Gruppen von Arbeitseinheiten ermöglicht werden. Die verschiedenen Produkte können verschiedene Saatgutarten, -behandlungen, -formen, -größen, etc., oder auch unterschiedliches Erntegut betreffen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wurde ein Zuführsystem der eingangs genannten Art derart ausgebildet, dass die zweite Druckluftquelle einen höheren Betriebsdruck erzeugt als die erste Druckluftquelle. Es wurde somit ein Zuführsystem für ein landwirtschaftliches Produkt geschaffen, welches das Problem überwindet, dass eine zu hohe Druckluftbeaufschlagung für nahe gelegene Arbeitseinheiten erzeugt wird, damit genügend Druckluft für fern gelegene Arbeitseinheiten zur Verfügung steht. Es sind zwei oder mehr Saatguthauptbehälter vorgesehen, wobei die Saatguthauptbehälter durch eine Gebläseeinrichtung, welche die Luftdüsen der Saatguthauptbehälter versorgt, unterschiedlich hoch mit Druckluft beaufschlagt sind. Die nahe gelegenen Reihen-Arbeitseinheiten weisen Zuführschläuche auf, die mit einem ersten Saatguthauptbehälter verbunden sind. Die entfernt gelegenen Reihen-Arbeitseinheiten weisen längere Zuführschläuche auf, die mit einem zweiten Saatguthauptbehälter verbunden sind. Das Gebläse, welches den zweiten Saatguthauptbehälter versorgt, ist derart konfiguriert, dass der zweite Saatguthauptbehälter mit einem höheren Druck beaufschlagt ist, als der erste Saatguthauptbehälter. Es werden voneinander getrennte Zuführsysteme vorgesehen, um den Produktfluss zu den Reihen-Arbeitseinheiten an der Maschine besser steuern zu können.

Es wird ein Zuführsystem für ein landwirtschaftliches Produkt geschaffen, welches einen Rahmen, einen an den Rahmen montierten ersten Saatguthauptbehälter, einen an den Rahmen montierten zweiten Saatguthauptbehälter, eine erste Arbeitseinheit, eine zweite Arbeitseinheit und wenigstens eine Gebläseeinrichtung aufweist.

Jeder der ersten und zweiten Saatguthauptbehälter weist eine Düse mit einer Produktöffnung auf, in die das Produkt des jeweiligen Saatguthauptbehälters geleitet wird. Die Düse weist einen Lufteinlass, zum Einführen von Druckluft, und einen Produktauslass auf, zum Abführen von Druckluft und darin aufgenommenem Produkt.

Jede der ersten und zweiten Arbeitseinheit weist eine Dosiervorrichtung auf, zum Ausbringen des Produkts auf ein Feld. Die Dosiervorrichtung der ersten Arbeitseinheit steht in Verbindung mit dem ersten Saatguthauptbehälter und die Dosiervorrichtung der zweiten Arbeitseinheit steht in Verbindung mit dem zweiten Saatguthauptbehälter.

Entsprechend einer bevorzugten Ausführungsform weist die Gebläseeinrichtung zwei Gebläse auf, wobei ein erster Gebläseluftstrom dem Lufteinlass der Düse des ersten Saatguthauptbehälters und ein zweiter Gebläseluftstrom dem Lufteinlass der Düse des zweiten Saatguthauptbehälters zugeführt wird.

Vorzugsweise erzeugt das zweite Gebläse einen höheren Druck als das erste Gebläse. Der zweite Saatguthauptbehälter wird mit einem höheren Betriebsdruck beaufschlagt als der erste Saatguthauptbehälter. Die Dosiervorrichtung der zweiten Arbeitseinheit ist weiter entfernt vom zweiten Saatguthauptbehälter angeordnet als die Dosiervorrichtung der ersten Arbeitseinheit vom ersten Saatguthauptbehälter.

In einer weiteren Ausführungsform ist die Gebläseeinrichtung als herkömmliches Gebläse ausgebildet, welches den ersten und den zweiten Saatguthauptbehälter versorgt, wobei zwischen dem Gebläse und dem Lufteinlass der Düse des ersten Saatguthauptbehälters eine Drossel angeordnet ist. Die Drossel ist derart ausgelegt, dass die Druckluft im ersten Saatguthauptbehälter einen niedrigeren Druck aufweist, als die Druckluft im zweiten Saatguthauptbehälter.

In einer weiteren Ausführungsform ist die Gebläseeinrichtung als herkömmliches Gebläse ausgebildet, welches den ersten und den zweiten Saatguthauptbehälter versorgt, wobei zwischen dem Gebläse und dem Lufteinlass der Düse des ersten und des zweiten Saatguthauptbehälters eine Drossel angeordnet ist. Die Drossel ist derart ausgelegt, dass die Druckluft im ersten Saatguthauptbehälter einen niedrigeren Druck aufweist, als die Druckluft im zweiten Saatguthauptbehälter. Die Drosselung kann derart ausgewählt werden, dass der Betriebsdruck im ersten und im zweiten Saatguthauptbehälter variierbar ist.

Die Erfindung ist insbesondere vorteilhaft, wenn die Arbeitseinheiten Pflanzeinheiten sind und das Produkt Saatgut ist. Vorzugsweise ist an jeder Pflanzeinheit zwischen dem Zuführschlauch und der Dosiervorrichtung ein Hilfsbehälter angeordnet.

Die Erfindung verringert das Auftreten von Überfüllung und Verstopfung der Zuführschläuche. Die Erfindung ermöglicht dem Betreiber auch den Druck im Saatguthauptbehälter für getrennte Bereiche der Maschine zu steuern, um einfacher Anpassungen an verschiedene Feldbedingungen vornehmen zu können, wie z. B. an Seitenhängen, bei denen ein höherer Behälterdruck benötigt wird, um das Produkt den äußeren Reiheneinheiten zuzuführen.

In einem anderen Ausführungsbeispiel der Erfindung kann der erste Saatguthauptbehälter mit einem ersten Produkt und der zweite Saatguthauptbehälter mit einem zweiten, unterschiedlichen Produkt befüllt werden. Der erste Saatguthauptbehälter kann das Produkt einer ersten Gruppe von Arbeitseinheiten und der zweite Saatguthauptbehälter einer zweiten Gruppe von Arbeitseinheiten zuführen. Die ersten und zweiten Arbeitseinheiten können an gegenüberliegenden Seiten der landwirtschaftlichen Maschine angeordnet sein, um das Produkt auf verschiedene Bereiche der Reihen eines Feldes auszubringen. Die verschiedenen Produkte können unterschiedliche Arten von Saatgut mit unterschiedlichen Behandlungen, Formen, Größen, etc. sein. Die unterschiedlichen Produkte können unterschiedliche Erntegutsorten sein.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Seitenansicht einer landwirtschaftlichen Pflanzmaschine mit einem erfindungsgemäßen Zuführsystem,

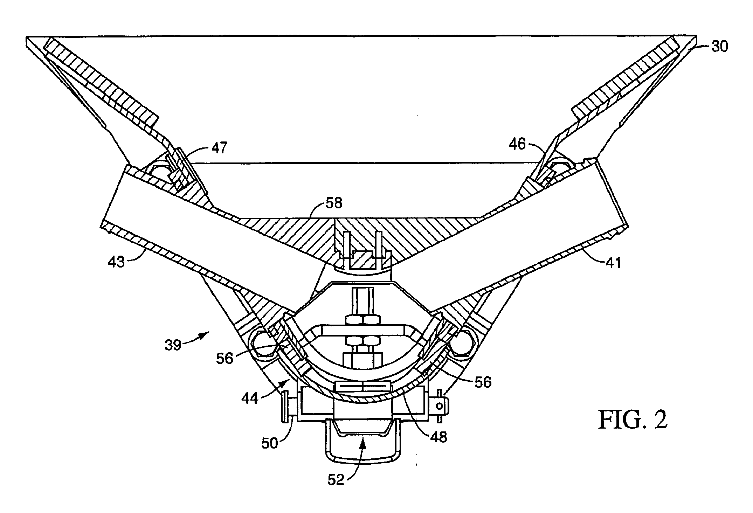

- Fig. 2: eine Seitenansicht eines Querschnitts der Düsenanordnung des Zuführsystems,

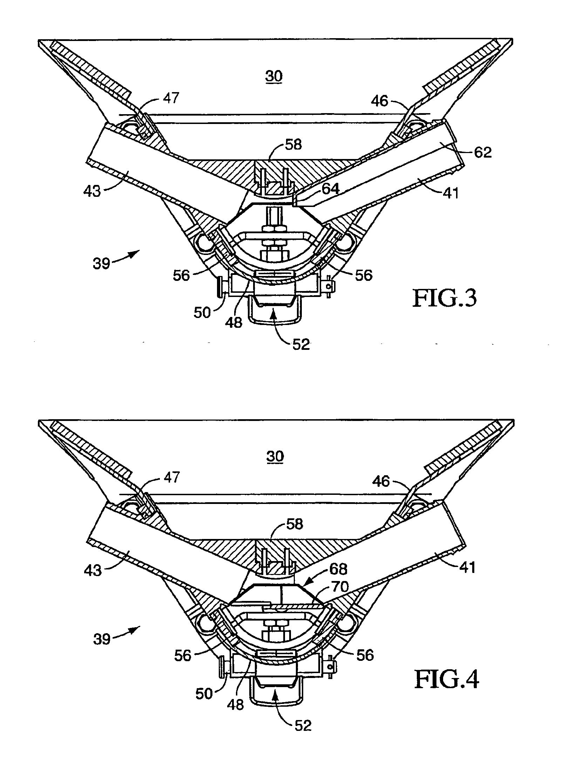

- Fig. 3: eine Seitenansicht eines Querschnitts der Düsenanordnung des Zuführsystems mit einem Luftablenkeinsatz,
- Fig. 4: eine Seitenansicht eines Querschnitts der Düsenanordnung des Zuführsystems mit einem Element zur Abgabebegrenzung,

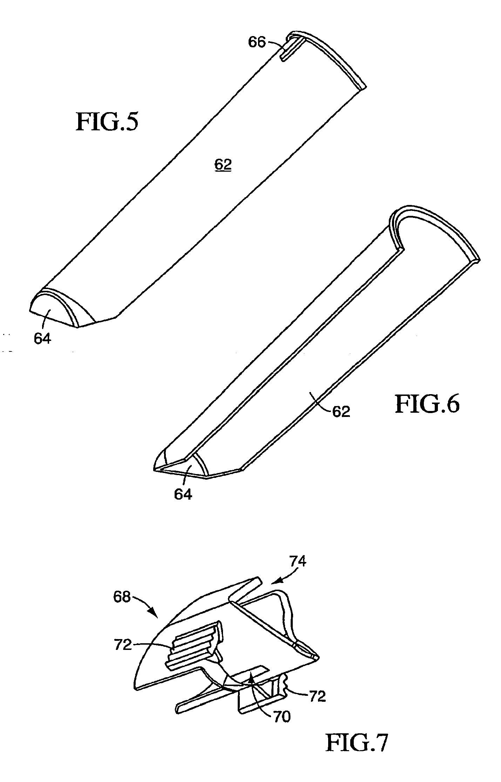

- Fig. 5: eine perspektivische Draufsicht des Luftablenkeinsatzes,
- Fig. 6: eine perspektivische Unteransicht des Luftablenkeinsatzes,
- Fig. 7: eine perspektivische Unteransicht des Elements zur Abgabebegrenzung,

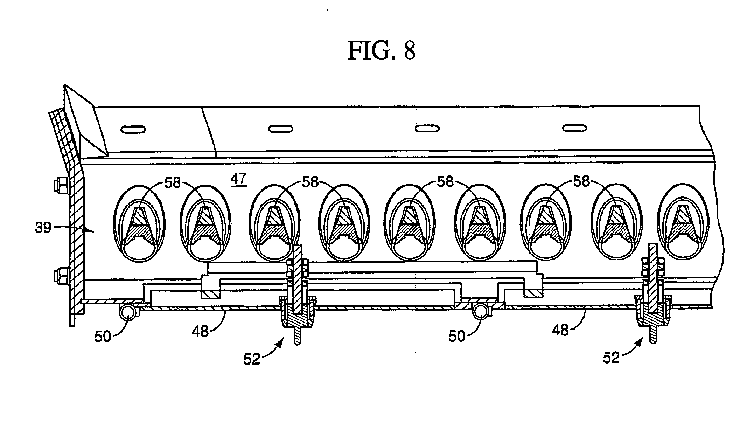

- Fig. 8: eine Querschnittsansicht der Düsenanordnung des Zuführsystems von vorn,

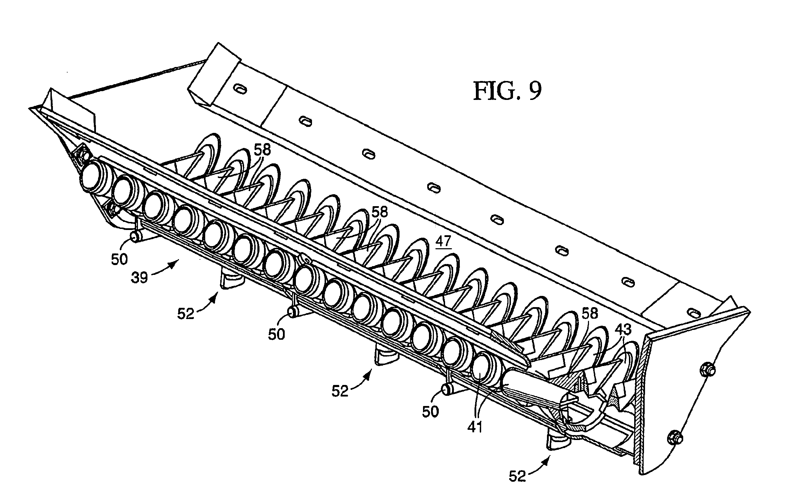

- Fig. 9: eine perspektivische Vorderansicht der Düsenanordnung des Zuführsystems mit einem Teilquerschnitt,
- Fig. 10: eine perspektivische Vorderansicht der Düsenanordnung, welche mit einer Rührvorrichtung versehen ist,
- Fig. 11: eine Querschnittsansicht der mit einer Rührvorrichtung versehenen Düsenanordnung,
- Fig. 12: einen schematischen Schaltplan eines Zuführsystems gemäß einer Ausführungsform der Erfindung,
- Fig. 13: einen schematischen Schaltplan eines Zuführsystems gemäß einer weiteren Ausführungsform der Erfindung,
- Fig. 14: einen schematischen Schaltplan eines Zuführsystems gemäß einer weiteren Ausführungsform der Erfindung,
- Fig. 15: einen schematischen Schaltplan eines Zuführsystems gemäß einer weiteren Ausführungsform der Erfindung,
- Fig. 16: einen schematischen Schaltplan eines Zuführsystems gemäß einer weiteren Ausführungsform der Erfindung und
- Fig. 17: einen schematischen Schaltplan eines Zuführsystems gemäß einer weiteren Ausführungsform der Erfindung.

Eine landwirtschaftliche Sämaschine 10 umfasst einen Rahmen 12 an dem eine Vielzahl einzelner Pflanzeinheiten 14 montiert sind. Die Pflanzeinheiten 14 sind mittels eines Parallelogrammgestänges 16 an den Rahmen 12 montiert, so dass die Pflanzeinheiten 14 sich einzeln auf einer begrenzten Bewegungsbahn relativ zum Rahmen 12 auf und ab bewegen können. Jede der einzelnen Pflanzeinheiten 14 umfasst einen Hilfsbehälter 18 zur Aufnahme von Saatgut, eine Dosiervorrichtung 20 zur Dosierung des von dem Hilfsbehälter 18 bereitgestellten Saatguts und einen Furchenöffner 22 zum Formen einer Pflanzfurche in einen Boden, in die das von der Dosiervorrichtung 20 dosierte Saatgut abgelegt wird. Das Saatgut wird über einen Saatgutschlauch 24 von der Dosiervorrichtung 20 in die Pflanzfurche geleitet. Zum Schließen der Pflanzfurche, mit dem darin abgelegten Saatgut, wird eine Schließeinrichtung 26 eingesetzt. In einem bevorzugten Ausführungsbeispiel ist die Dosiervorrichtung 20 als Vakuumdosiervorrichtung ausgebildet, obwohl auch andere Arten von Dosiervorrichtungen 20 zum Einsatz kommen können, die rein mechanisch oder mit Druckluft betrieben werden. Es sei erwähnt, dass die vorliegende Erfindung auch für das Ausbringen von Nicht-Saatgut-Produkten auf ein Feld einsetzbar ist. Für Saatgut- und Nicht-Saatgut-Produkte kann die Pflanzeinheit 14 als Ausbringeinheit angesehen werden, welche einen Behälter 18 zur Aufnahme von Produkten, eine Dosiervorrichtung 20 zur Dosierung des vom Behälter 18 zugeführten Produkts und eine Ausbringeinrichtung zum Ausbringen des Produkts auf ein Feld aufweist. Beispielsweise kann chemischer Trockendünger oder Pflanzenschutzmittel dem Behälter 18 zugeführt werden, durch die Dosiervorrichtung 20 dosiert und durch die Ausbringeinrichtung auf das Feld ausgebracht werden.

Der Rahmen 12 trägt einen Hauptbehälter 30 und eine Druckluftpumpe 32. Die Druckluftpumpe 32 wird über einen hydraulischen Motor angetrieben, wobei auch andere Arten von Motoren, wie z. B. Elektromotoren, für den Antrieb der Druckluftpumpe eingesetzt werden können. Die Druckluftpumpe 32 fördert Druckluft in einen Verteiler 34 über einen Hauptluftschlauch 36. Der Verteiler 34 ist aus einem geschlossenen, hohlen Trägerteil des Rahmens 12 ausgebildet. Der Verteiler 34 weist entsprechend der Anzahl der am Rahmen 12 montierten Pflanzeinheiten 14 eine Vielzahl von Verteilerauslässen auf. Einzelne Luftversorgungsschläuche 38 erstrecken sich von den Verteilerauslässen und leiten Druckluft vom Verteiler 34 zu der stromaufwärts gelegenen Seite einer Düsenanordnung 39. Die Düsenanordnung 39 ist auf dem Boden des Hauptbehälters 30 angeordnet. Das im Hauptbehälter 30 befindliche Produkt fließt mittels Schwerkraft in die Düsenanordnung 39. Die stromaufwärts gelegene Seite der Düsenanordnung 39 ist entsprechend der Anzahl der Luftversorgungsschläuche 38 mit einer Vielzahl von Lufteinlässen 41 versehen. Die Lufteinlässe 41 sind in Querrichtung entlang der stromaufwärts gelegenen Seite der Düsenanordnung 39 zueinander beabstandet angeordnet. Die stromabwärts gelegene Seite der Düsenanordnung 39 ist entsprechend der Anzahl der Luftversorgungsschläuche 38 mit einer Vielzahl von Produktauslässen 43 versehen. Die Produktauslässe 43 sind ebenfalls in Querrichtung auf der stromabwärts gelegenen Seite der Düsenanordnung 39 zueinander beabstandet angeordnet.

Jeder Lufteinlass 41 ist zu einem entsprechenden Produktauslass 43 ausgerichtet. Produktversorgungsschläuche 42 erstrecken sich von den Produktauslässen 43 zu den einzelnen (Saatgut-)Behältern 18 und leiten das im Luftstrom aufgenommene Produkt dorthin.

Die Düsenanordnung 39 ist mit einem konkaven Boden 44 versehen und weist nach außen auseinander laufende Seitenwände 46, 47 auf. Über einen Deckel 48 wird Saatgut oder Nicht-Saatgut-Produkt in den Hauptbehälter 30 gefüllt. Teile der Düsenanordnung 39 können geöffnet werden, um eine Reinigungsöffnung 48 bereitzustellen, wie in US 6,609,468 A beschrieben ist.

Jeder Lufteinlass 41 und entsprechender Produktauslass 43 sind aus zwei Kunststoffteilen hergestellt. Die Kunststoffteile werden über Stifte, welche an dem einen Teil ausgebildet sind und über Aufnahmen, welche an dem anderen Teil ausgebildet sind, zusammengesteckt. Der Lufteinlass 41 ist relativ zum konkaven Boden 44 geneigt und der Produktauslass 43 entsprechend relativ zum konkaven Boden 44 ansteigend angeordnet. Eine integrierte Blende 58 erstreckt sich zwischen dem Lufteinlass 41 und dem Luftauslass 43. Die Blende 58 ist spitz zulaufend ausgebildet und über dem Luftstrom, der von dem Lufteinlass 41 zu dem Produktauslass 43 strömt, angeordnet. Der geneigte Lufteinlass 41 verhindert ein Zurückströmen von Produkt in den Luftversorgungsschlauch 38, wohingegen der ansteigende Produkteinlass 43 einen Produktfluss in den Produktversorgungsschlauch 42 sowie eine Verstopfung dessen verhindert.

Benachbarte Lufteinlass 41/Produktauslass 43-Kombinationen sind in Querrichtung derart zueinander beabstandet angeordnet, dass das Saatgut oder Nicht-Saatgut-Produkt auf beiden Seiten der Blende 58 passieren und sich unterhalb der Blende 58 anhäufen kann. Ein Luftstrom, der vom Lufteinlass 41 zum Produktauslass 43 strömt, nimmt Produkt aus der Anhäufung auf und befördert es durch den Produktversorgungsschlauch 42 zu dem Behälter 18. Das Befördern von Produkt aus dem Hauptbehälter 30 zu den Behältern 18 wird automatisch durchgeführt, wenn Produkt in den Behältern 18 benötigt wird. Sobald ein einzelner Behälter 18 mit Produkt befüllt wird, wird ein Produkteinlass 60 des Behälters 18 von Produkt abgedeckt, wodurch dieser blockiert wird und sich der Luftstrom verlangsamt, so dass der Luftstrom am Hauptbehälter 30 kein Produkt mehr aufnehmen und dieses zu den einzelnen Behältern 18 befördern kann. Umgekehrt, wenn das Produkt von der Dosiervorrichtung 20 verbraucht wird, wird der Produkteinlass 60 des Behälters 18 freigelegt, wodurch der Luftstrom wieder Produkt zur Beförderung in den Behälter 18 aufnehmen kann. Auf diese Art werden die Behälter 18 stetig und automatisch mit Produkt versorgt. Die Seitenwände des Behälters 18 sind mit Entlüftungssieben 61 versehen um in den Behältern 18 eine Entlüftung der Druckluft zu erzielen. Die Entlüftungssiebe 61 können auch in den Deckeln der Behälter 18 angeordnet werden, sofern die Entlüftungssiebe 61 oberhalb der entsprechenden Produkteinlässe 60 gelegen sind.

In einigen Fällen weist das Produkt große Partikel auf, wie z. B. großes Saatgut (Mais und Sojabohnen) und es ist schwer für den Luftstrom dieses aufzunehmen. Um sich großem Saatgut anzupassen können die Lufteinlässe 41 mit einem Einschub 62 versehen sein, welche einen Ablenkbereich 64 für den Luftstrom aufweisen, der einen Teil des Luftstroms nach unten hin ablenkt, um das Saatgut in der Anhäufung aufzuwirbeln, so dass das Saatgut besser von dem Luftstrom aufgenommen werden kann, wenn dieser in den Produktauslass 43 strömt. Der Einschub 62 ist mit einem Positioniersteg 66 versehen, welcher in eine am Lufteinlass 41 ausgebildete Aussparung eingreift, um eine korrekte Ausrichtung des Einschubs 62 und des Ablenkbereichs 64 zu gewährleisten.

In anderen Fällen kann das Saatgut oder Nicht-Saatgut-Produkt zu leicht sein und wird schon durch geringe Luftströme sofort weggetragen. Um dies zu verhindern können die Blenden 58 mit einem Element 68 versehen werden. Das Element 68 kann an die Blenden 58 angeklemmt werden. Das Element 68 weist einen versperrenden Boden 70 auf, der die dem Luftstrom ausgesetzte Menge an Produkt begrenzt. Das Element 68 ist aus Kunststoff hergestellt und mit Fingergriffen 72 versehen. Durch zusammenpressen der Fingergriffe 72 wird ein oberer Spalt 74 geöffnet, so dass das Element 68 an die Blenden 58 angeklemmt werden kann.

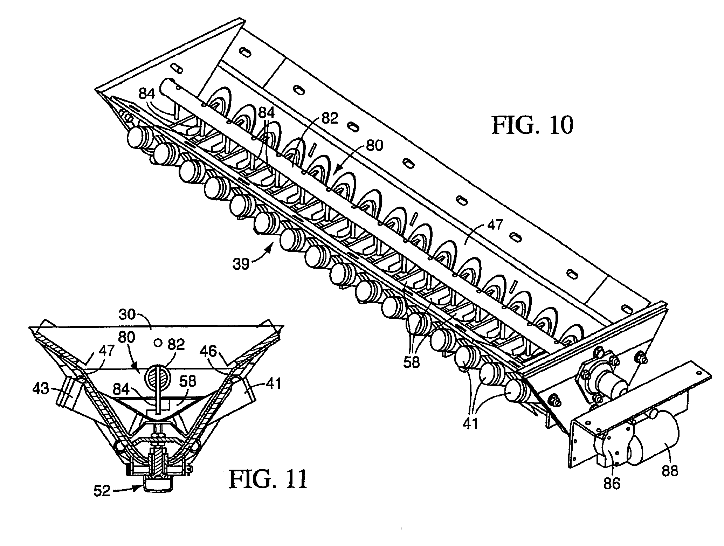

In einem alternativen Ausführungsbeispiel kann der Einschub 62 für großes Saatgut auch durch eine Rührvorrichtung 80 ersetzt werden. Die Rührvorrichtung 80 weist eine Querstange 82 auf, die sich quer zur Düsenanordnung 39 erstreckt. Die Querstange 82 ist mit mehreren sich radial erstreckenden Fingern 84 versehen. Wie in Figur 10 gezeigt ist, sind die Finger 84 in Querrichtung zueinander ausgerichtet.

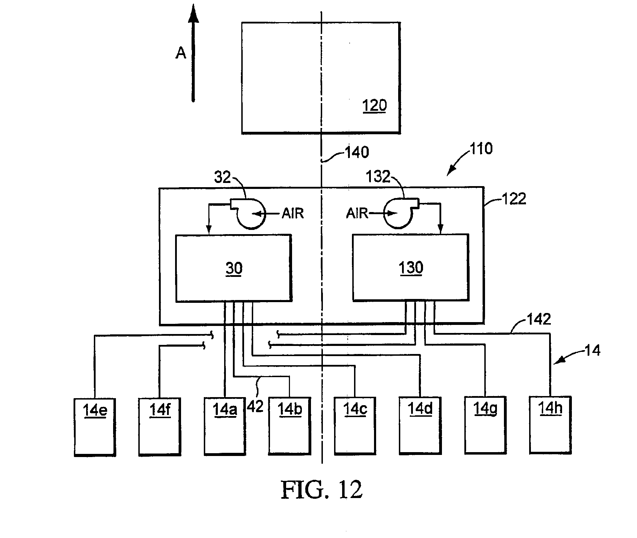

Die Querstange 82 wird über ein durch einen Motor 88 angetriebenes Getriebe 86 hin- und her gedreht. In der unteren Totpunktstellung der Finger 84 erstrecken diese sich zwischen den einzelnen Düsen, die durch die zueinander ausgerichteten Lufteinlässe 41 und Produktauslässe 43 gebildet werden. Auf diese Art wird der Bereich zwischen den Düsen von den Fingern 84 verrührt. Ausgehend von der unteren Totpunktstellung, wie sie in Figur 11 dargestellt ist, dreht die Getriebe 86/Motor 88 Anordnung die Querstange 82 um 51,5 Grad in jede Richtung. Somit werden die Finger 84 in einem Winkel von 103 Grad verschwenkt.

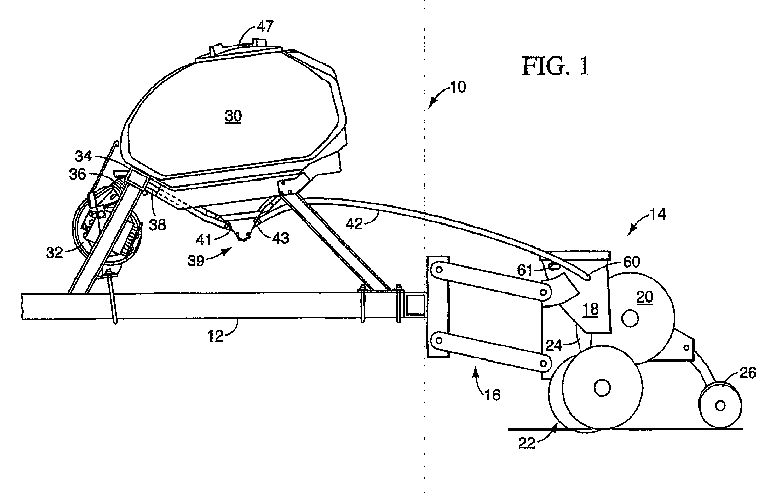

Figur 12 zeigt auf schematische, blockdiagramm-artige Weise eine beispielhafte Ausführung der Erfindung, ausgeführt an einer Pflanzmaschine 110. Ein Fahrzeug, wie z. B. ein Schlepper 120, zieht die Maschine 110 in Richtung "A" über ein Feld. Die Maschine weist einen Rahmen 122, der einen ersten und einen zweiten Hauptbehälter oder Haupttank 30, 130 trägt, auf. Der Rahmen 122 zieht eine Vielzahl von Ausbringeinheiten 14, wie zuvor mit Bezugnahme auf Figur 1 beschrieben ist. Die Ausbringeinheiten 14 sind einzeln bezeichnet mit 14a bis 14h.

Die vier Ausbringeinheiten 14 nahe einer Mittelachse 140 sind mit 14a bis 14d bezeichnet und die vier von der Mittelachse 140 entfernt liegenden Ausbringeinheiten 14 mit 14e bis 14h. Auch wenn nur acht Ausbringeinheiten 14 dargestellt sind, ist es selbstverständlich möglich mehr oder weniger Ausbringeinheiten 14 anzuordnen. Die Erfindung eignet sich insbesondere für die Anwendung mit zwei Hauptbehältern oder Tanks 30, 130 mit 32 Ausbringeinheiten 14.

Entsprechend dem in Figur 12 dargestellten System ist der erste Hauptbehälter 30 mit einem Gebläse 32 bestückt, wie oben mit Bezugnahme auf Figur 1 beschrieben ist, während der zweite Hauptbehälter 130 mit einem separaten Gebläse 132 bestückt ist. Jede Ausbringeinheit der Gruppe 14a, 14b, 14c und 14d, die nahe der Mittellinie 140 der Maschine 110 angeordnet ist, ist über einen Schlauch 42 mit dem ersten Hauptbehälter 30 verbunden, wie oben mit Bezugnahme auf Figur 1 beschrieben ist. Die Ausbringeinheiten 14e, 14f, 14g, 14h sind jede mit einem längeren Schlauch 142 mit dem zweiten Hauptbehälter 130 auf gleiche Weise verbunden. Aufgrund dieser Anordnung, bei der die Ausbringeinheiten 14e, 14f, 14g, 14h am weitesten entfernt von der Mittellinie 140 der Maschine 110 angeordnet sind, ist zur Überwindung eines höheren Druckabfalls im Schlauch 142 ein höherer Druck im zweiten Hauptbehälter 130 vorteilhaft, um die Versorgung dieser weiter entfernt liegenden Ausbringeinheiten sicherzustellen.

Erfindungsgemäß wird der zweite Hauptbehälter 130 durch das das Gebläse 132 mit einem höheren Druck beaufschlagt als der erste Hauptbehälter 30 durch das Gebläse 30. Dementsprechend wird hinsichtlich der Produktversorgung durch ein höheres Maß an Druckluftsteuerung sichergestellt, dass, im Vergleich zu den entfernter liegenden Ausbringeinheiten, die nahe gelegenen Ausbringeinheiten nicht mit zu hoher Druckluft betrieben und überversorgt werden.

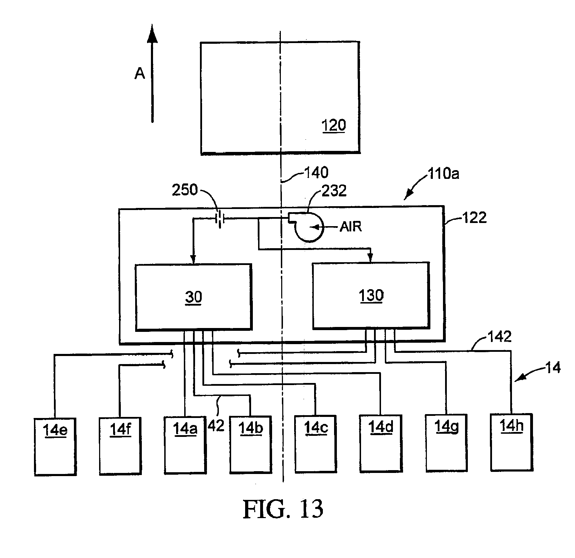

Figur 13 zeigt auf schematische, blockdiagramm-artige Weise eine weitere beispielhafte Ausführung einer Maschine 110a, bei der ein einziges Gebläse 232 sowohl den ersten als auch den zweiten Hauptbehälter 30, 130 mit Druckluft beaufschlagt. Bei diesem System wird zwischen dem Gebläse 232 und dem ersten Hauptbehälter 30, eine Drosselstelle 250, wie z. B. eine Blende, vorgesehen, jedoch nicht zwischen dem Gebläse 232 und dem zweiten Hauptbehälter 130. Somit kann das Gebläse 232 auf den höheren Druck, der für den zweiten Hauptbehälter 130 zur Beförderung des Produkts an die entfernt gelegenen Ausbringeinheiten erforderlich ist, eingestellt werden, wohingegen die Drosselstelle 250 den Druck für den ersten Hauptbehälter 30, der das Produkt für die nahe gelegenen Ausbringeinheiten liefert, drosselt. Die Drosselstelle 250 kann alternativ auch als manuell einstellbarer Schieber oder als Regelschieber ausgebildet sein.

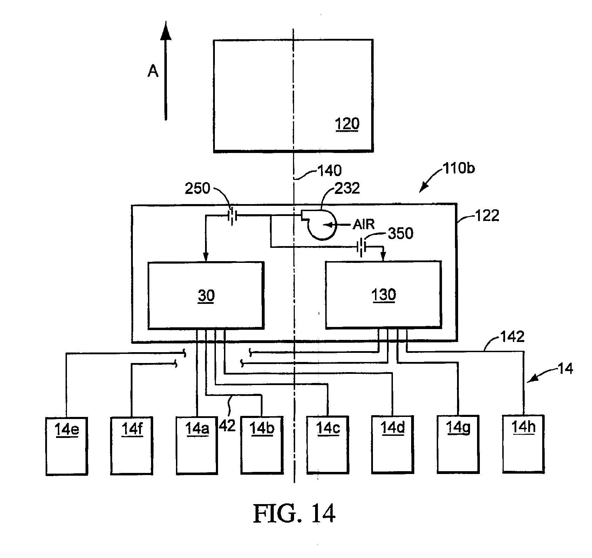

Figur 14 zeigt ein weiteres alternatives Ausführungsbeispiel einer Maschine 110b, bei der beide Hauptbehälter 30, 130 ein gemeinsames Gebläse 232 aufweisen, jedoch auch eine Drosselstelle 350 zwischen dem Gebläse 232 und dem zweiten Hauptbehälter 130 vorgesehen ist. Die Drosselstellen 250, 350 können voreinstellbar ausgebildet sein, um den Betriebsdruck in den beiden Hauptbehältern 30, 130 variieren zu können. Die Drosselstellen 250, 350 können als Blenden oder als manuell einstellbare Schieber oder als Regelschieber ausgebildet sein.

Bezüglich der Ausführungsbeispiele in den Figuren 12 bis 14, können bei Einsatz von zweiunddreißig Ausbringeinheiten 14, die sechzehn näher zur Mitte gelegenen Ausbringeinheiten 14 eine Schlauchverbindung zum ersten Hauptbehälter 30 und die sechzehn äußeren Ausbringeinheiten 14 (acht Ausbringeinheiten 14 auf jeder Seite der näher zur Mitte gelegenen Ausbringeinheiten) eine Schlauchverbindung zum zweiten Hauptbehälter 130 aufweisen, wobei letztere mit höherer Druckluft betrieben werden.

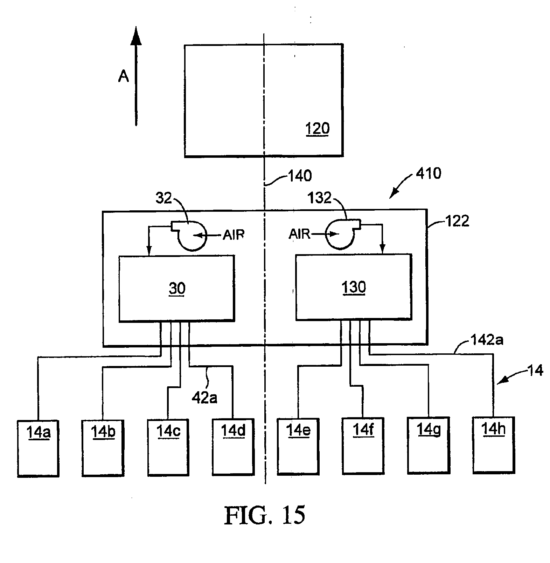

In den Figuren 15 bis 17 sind weitere Ausführungsbeispiele von Maschinen 410, 410a, 410b gezeigt, die ähnlich zu den Ausführungen in den Figuren 12 bis 14 ausgebildet sind, außer das die Schläuche 42a, 142a zu verschiedenen Seiten der Maschine 410 geführt sind. Entsprechend den Ausführungen in den Figuren 15 bis 17 können verschiedene Saatgutarten, Saatgutbehandlungen, Saatgutgrößen, Saatgutformen etc. oder verschiedene Kulturen von den Hauptbehältern 30, 130 in verschiedenen Reihen von Ausbringeinheiten 14 ausgebracht werden, z. B. kann das von den Ausbringeinheiten 14a bis 14d ausgebrachte Produkt sich von dem von den Ausbringeinheiten 14e bis 14h ausgebrachte Produkt unterscheiden.

In Figur 15 sind zwei Gebläse 32, 132 dargestellt, die den ersten und den zweiten Hauptbehälter 30, 130 mit unterschiedlichen Drücken beaufschlagen.

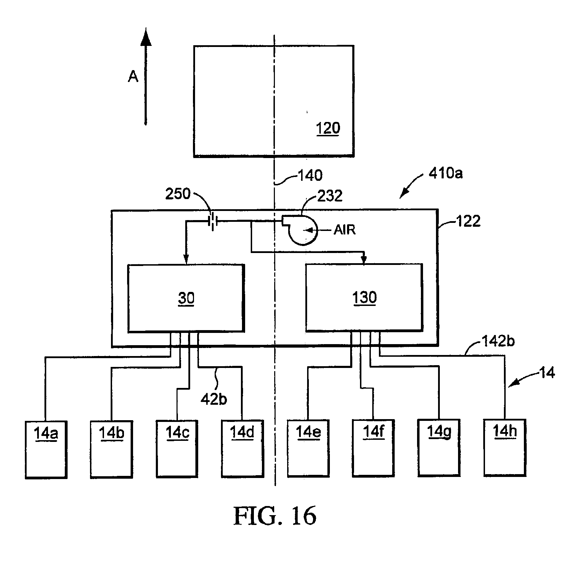

In Figur 16 ist ein zu Figur 15 alternatives Ausführungsbeispiel dargestellt, in dem ein gemeinsames Gebläse 232 beide Hauptbehälter mit Druckluft versorgt und die Drosselstelle 250 den Druck im ersten Hauptbehälter drosselt.

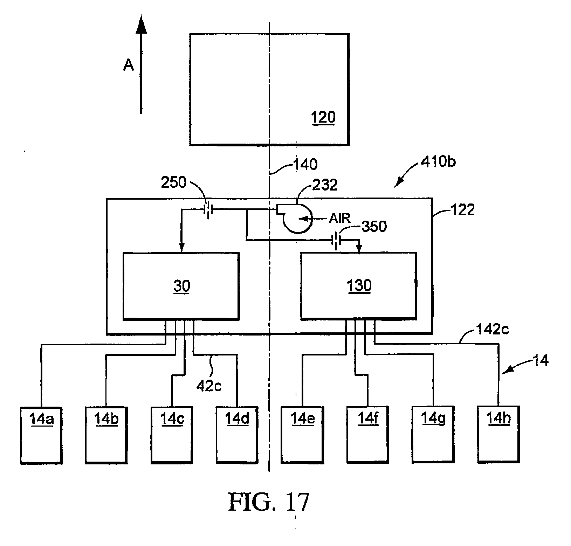

Figur 17 stellt ein weiteres alternatives Ausführungsbeispiel zu dem in Figur 16 dargstellten Ausführungsbeispiel dar, wobei eine weitere Drosselstelle 350 zwischen dem gemeinsamen Gebläse 232 und dem zweiten Hauptbehälter 130 angeordnet ist. Entsprechend dieser Ausführung können die Drosselstellen 250, 350 ausgewählt werden, um den relativen Druck in den Hauptbehältern 30, 130 festzulegen.

## Patentansprüche

1. Zuführsystem für landwirtschaftliches Produkt, insbesondere für Saatgut, mit einem Rahmen (12), einem am Rahmen (12) montierten ersten Hauptbehälter (30), einem am Rahmen (12) montierten zweiten Hauptbehälter (130), wobei jeder der Hauptbehälter (30, 130) eine Düsenanordnung (39) mit einer Eintrittsöffnung für Produkte aufweist, in die das Produkt aus dem entsprechenden Hauptbehälter (30, 130) geleitet wird und wobei die Düsenanordnung (39) einen Lufteinlass (41) zum Einleiten von Druckluft und einen Produktauslass (43) zum Abführen von Druckluft und aufgenommenem Produkt aufweist, einer ersten am Rahmen (12) montierten Ausbringeinheit (14a bis 14d) und einer zweiten am Rahmen (12) montierten Ausbringeinheit (14a bis 14h), wobei jede Ausbringeinheit (14a bis 14h) eine Dosiervorrichtung (20) zum Ausbringen von Produkt auf ein Feld aufweist und wobei die Dosiervorrichtung (20) der ersten Ausbringeinheit (14a bis 14d) mit dem ersten Hauptbehälter (30) und die Dosiervorrichtung (20) der zweiten Ausbringeinheit (14e bis 14h) mit dem zweiten Hauptbehälter (130) in Verbindung steht, einer mit dem Lufteinlass (41) der Düsenanordnung (39) des ersten Hauptbehälters (30) in Strömungsverbindung stehenden ersten Druckluftquelle und einer mit dem Lufteinlass (41) der Düsenanordnung (39) des zweiten Hauptbehälters (130) in Strömungsverbindung stehenden zweiten Druckluftquelle, **dadurch gekennzeichnet, dass** die zweite Druckluftquelle einen höheren Betriebsdruck erzeugt als die erste Druckluftquelle.

2. Zuführsystem nach Anspruch 1, **dadurch gekennzeichnet, dass** der zweite Hauptbehälter (130) mit einem höheren Betriebsdruck versorgt wird als der erste Hauptbehälter (30).

3. Zuführsystem nach einem der Ansprüche 1 oder 2, **dadurch gekennzeichnet, dass** die zweite Ausbringeinheit (14e bis 14h) weiter entfernt vom zweiten Hauptbehälter (130) angeordnet ist, als die erste Ausbringeinheit (14a bis 14d) vom ersten Hauptbehälter (30).

4. Zuführsystem nach einem der Ansprüche 1 bis 3, **dadurch gekennzeichnet, dass** weitere erste Ausbringeinheiten (14a bis 14d) mit weiteren mit dem ersten Hauptbehälter (30) in Strömungsverbindung stehenden Dosiervorrichtungen (20) und weitere zweite Ausbringeinheiten (14e bis 14h) mit weiteren mit dem zweiten Hauptbehälter (130) in Strömungsverbindung stehenden Dosiervorrichtungen (20) vorgesehen sind.

5. Zuführsystem nach einem der Ansprüche 1 bis 4, **dadurch gekennzeichnet, dass** die ersten Ausbringeinheiten (14a bis 14d) auf einer Seite des Rahmens (12) und die zweiten Ausbringeinheiten (14e bis 14h) auf einer entgegen gesetzten Seite des Rahmens (12) angeordnet sind.

6. Zuführsystem nach einem der Ansprüche 1 bis 5, **dadurch gekennzeichnet, dass** die erste Druckluftquelle ein erstes Gebläse (32) und die zweite Druckluftquelle ein zweites Gebläse (132) aufweist.

7. Zuführsystem nach einem der Ansprüche 1 bis 6, **dadurch gekennzeichnet, dass** die erste und die zweite Druckluftquelle ein gemeinsames Gebläse (232) und die erste Druckluftquelle eine zwischen dem gemeinsamen Gebläse (232) und dem Lufteinlass (41) der Düsenanordnung (39) des ersten Hauptbehälters (30) angeordnete Drosselstelle (250) aufweist, wobei die Drosselstelle (250) derart konfiguriert ist, dass der Luftdruck im ersten Hauptbehälter (30) auf einen niedrigeren Wert als der Luftdruck im zweiten Hauptbehälter (132) gedrosselt wird.

8. Zuführsystem nach Anspruch 7, **dadurch gekennzeichnet, dass** die zweite Druckluftquelle eine weitere Drosselstelle (350) aufweist, die zwischen dem gemeinsamen Gebläse (232) und dem Lufteinlass (41) der Düsenanordnung (39) des zweiten Hauptbehälters (130) angeordnet ist.

9. Zuführsystem nach einem der Ansprüche 1 bis 8, **dadurch gekennzeichnet, dass** das Produkt in den Hauptbehältern (30, 130) mittels Schwerkraft in die Düsenanordnungen (39) geleitet wird.

10. Zuführsystem nach einem der Ansprüche 1 bis 9, **dadurch gekennzeichnet, dass** die Düsenanordnung (39) eine stromaufwärts gerichtete Seitenwand (46), eine stromabwärts gerichtete Seitenwand (47) und einen Boden (48) aufweist.

11. Zuführsystem nach einem der Ansprüche 1 bis 10, **dadurch gekennzeichnet, dass** die erste Ausbringeinheit (14a bis 14d) und/oder die zweite Ausbringeinheit (14e bis 14h) als Pflanzeinheit ausgebildet ist, wobei die Pflanzeinheit mit einer Dosiervorrichtung (20) zur Dosierung von Saatgut und mit einem Furchenöffner (22) zum Ausformen einer Pflanzfurche, in die das dosierte Saatgut abgelegt wird, versehen ist, wobei die Dosiervorrichtung (20) der Pflanzeinheit über einen mit dem Produktauslass (43) des entsprechenden Hauptbehälters (30, 132) verbundenen Produktzuführschlauch (42, 42a, 42b, 42c, 142, 142a, 142b, 142c) mit dem entsprechenden Hauptbehälter (30, 130) verbunden ist.

12. Zuführsystem nach Anspruch 10 oder 11, **dadurch gekennzeichnet, dass** der Lufteinlass (41) mit der stromaufwärts gerichteten Seitenwand (46) verbunden ist und gegenüber dem Produktauslass (43) des Hauptbehälters (30, 130) angeordnet ist, so dass der Luftstrom durch die Düsenanordnung (39) vom Lufteinlass (41) zum Produktauslass (43) strömt, so dass Saatgut, welches sich auf dem Boden (48) der Düsenanordnung (39) befindet, vom Luftstrom aufgenommen und durch den Produktzuführschlauch (42, 42a, 42b, 42c, 142, 142a, 142b, 142c) zur Dosiervorrichtung (20) der Ausbringeinheit (14a bis 14h) geleitet wird.

13. Zuführsystem nach einem der Ansprüche 1 bis 12, **dadurch gekennzeichnet, dass** jede Ausbringeinheit (14a bis 14h) mit einem Hilfsbehälter (18) versehen ist, welcher zwischen dem Produktauslass (43) und der Dosiervorrichtung (20) angeordnet ist.

## Claims

1. Feed system for an agricultural product, in particular for seed, having a frame (12), a first main container (30) mounted on the frame (12), a second main container (130) mounted on the frame (12), each of the main containers (30, 130) exhibiting a nozzle arrangement (39) having an inlet opening for products, into which opening the product is conveyed from the corresponding main container (30, 130), and the nozzle arrangement (39) exhibiting an air inlet (41) for the admission of compressed air and a product outlet (43) for the extraction of compressed air and picked-up product, a first discharge unit (14a to 14d) mounted on the frame (12) and a second discharge unit (14e to 14h) mounted on the frame (12), each discharge unit (14a to 14h) exhibiting a metering device (20) for discharging product onto a field, the metering device (20) of the first discharge unit (14a to 14d) being connected to the first main container (30), and the metering device (20) of the second discharge unit (14e to 14h) being connected to the second main container (130), a first compressed air source standing in fluid connection with the air inlet (41) to the nozzle arrangement (39) of the first main container (30) and a second compressed air source standing in fluid connection with the air inlet (41) to the nozzle arrangement (39) of the second main container (130), **characterized in that** the second compressed air source generates a higher operating pressure than the first compressed air source.

2. Feed system according to Claim 1, **characterized in that** the second main container (130) is supplied with a higher operating pressure than the first main container (30).

3. Feed system according to one of Claims 1 or 2, **characterized in that** the distance of the second discharge unit (14e to 14h) from the second main container (130) is greater than the distance of the first discharge unit (14a to 14d) from the first main container (30).

4. Feed system according to one of Claims 1 to 3, **characterized in that** further first discharge units (14a to 14d) having further metering devices (20) in fluid connection with the first main container (30) and further second discharge units (14e to 14h) having further metering devices (20) in fluid connection with the second main container (130) are provided.

5. Feed system according to one of Claims 1 to 4, **characterized in that** the first discharge units (14a to 14d) are arranged on one side of the frame (12) and the second discharge units (14e to 14h) are arranged on an opposing side of the frame (12).

6. Feed system according to one of Claims 1 to 5, **characterized in that** the first compressed air source exhibits a first fan (32), and the second compressed air source exhibits a second fan (132).

7. Feed system according to one of Claims 1 to 6, **characterized in that** the first and the second compressed air sources exhibit a common fan (232), and the first compressed air source exhibits a restricted flow zone (250) arranged between the common fan (232) and the air inlet (41) of the nozzle arrangement (39) of the first main container (30), the restricted flow zone (250) being configured in such a way that the air pressure in the first main container (30) is throttled back to a lower value than the air pressure in the second main container (132).

8. Feed system according to Claim 7, **characterized in that** the second compressed air source exhibits a further restricted flow zone (350), which is arranged between the common fan (232) and the air inlet (41) to the nozzle arrangement (39) of the second main container (130).

9. Feed system according to one of Claims 1 to 8, **characterized in that** the product in the main containers (30, 130) is conveyed into the nozzle arrangements (39) by gravity.

10. Feed system according to one of Claims 1 to 9, **characterized in that** the nozzle arrangement (39) exhibits a side wall (46) that is oriented upstream, a side wall (47) that is oriented downstream and a floor (48).

11. Feed system according to one of Claims 1 to 10, **characterized in that** the first discharge units (14a to 14d) and/or the second discharge units (14e to 14h) is/are executed as a planting unit, the planting unit being provided with a metering device (20) for metering seed and with a furrow opener (22) adapted to form a planting furrow, into which furrow the metered seed is deposited, the metering device (20) of the planting unit being connected to the corresponding main container (30, 130) via a product feed hose (42, 42a, 42b, 42c, 142, 142a, 142b, 142c) connected to the product outlet (43) of the corresponding main container (30, 132).

12. Feed system according to Claims 10 or 11, **characterized in that** the air inlet (41) is connected to the side wall (46) that is oriented upstream and is arranged opposite the product outlet (43) of the main container (30, 130), so that the air flow through the nozzle arrangement (39) flows from the air inlet (41) to the product outlet (43), so that seed that is present on the floor (48) of the nozzle arrangement (39) is picked up by the air flow and is conveyed through the product feed hose (42, 42a, 42b, 42c, 142, 142a, 142b, 142c) to the metering device (20) of the discharge unit (14a to 14h).

13. Feed system according to one of Claims 1 to 12, **characterized in that** each discharge unit (14a to 14h) is provided with an auxiliary container (18), which is arranged between the product outlet (43) and the metering device (20).

## Revendications

1. Système d'acheminement de produit agricole, en particulier pour des semences, comportant un châssis (12), une première trémie principale (30), montée sur le châssis (12), une deuxième trémie principale (130), montée sur le châssis (12), chacune des trémies principales (30, 130) comportant un système de buses (39) avec un orifice d'admission des produits, dans lequel est acheminé le produit sortant de la trémie principale (30, 130) correspondante et le système de buses (39) comportant une admission d'air (41) pour l'admission d'air comprimé et une sortie de produit (43) pour l'évacuation de l'air comprimé et du produit reçu, une première unité de distribution (14a à 14d), montée sur le châssis (12), et une deuxième unité de distribution (14e à 14h) montée sur le châssis (12), chaque unité de distribution (14a à 14h) comportant un dispositif de dosage (20) pour distribuer un produit sur un champ, et le dispositif de dosage (20) de la première unité de distribution (14a à 14d) étant relié à la première trémie principale (30) et le dispositif de dosage (20) de la deuxième unité de distribution (14e à 14h) étant relié à la deuxième trémie principale (130), une première source d'air comprimé en liaison avec l'admission d'air (41) du système de buses (39) de la première trémie principale (30) et une deuxième source d'air comprimé en liaison avec l'admission d'air (41) du système de buses (39) de la deuxième trémie principale (130), **caractérisé en ce que** la deuxième source d'air comprimé génère une pression de service plus élevée que la première source d'air comprimé.

2. Système d'acheminement selon la revendication 1, **caractérisé en ce que** la deuxième trémie principale (130) est alimentée par une pression de service plus élevée que la première trémie principale (30).

3. Système d'acheminement selon la revendication 1 ou 2, **caractérisé en ce que** la distance entre la deuxième unité de distribution (14e à 14h) et la deuxième trémie principale (130) est plus grande que la distance entre la première unité de distribution (14a à 14d) et la première trémie principale (30).

4. Système d'acheminement selon l'une quelconque des revendications 1 à 3, **caractérisé en ce qu'**il est prévu des dispositifs de dosage (20) supplémentaires, reliés à la première trémie principale (30) et des deuxièmes unités de distribution (14e à 14h) supplémentaires avec des dispositifs de dosage (20) supplémentaires reliés à la deuxième trémie principale (130).

5. Système d'acheminement selon l'une quelconque des revendications 1 à 4, **caractérisé en ce que** les premières unités de distribution (14a à 14d) sont montées sur un côté du châssis (12) et les deuxièmes unités de distribution (14e à 14h) sont montées sur un côté opposé du châssis (12).

6. Système d'acheminement selon l'une quelconque des revendications 1 à 5, **caractérisé en ce que** la première source d'air comprimé comporte un premier ventilateur (32) et la deuxième source d'air comprimé comporte un deuxième ventilateur (132).

7. Système d'acheminement selon l'une quelconque des revendications 1 à 6, **caractérisé en ce que** la première et la deuxième source d'air comprimé comportent un ventilateur (232) commun et la première source d'air comprimé comporte une zone d'étranglement (250) située entre le ventilateur (232) commun et l'admission d'air (41) du système de buses (39) de la première trémie principale (30), la zone d'étranglement (250) étant configurée de telle sorte que la pression d'air dans la première trémie principale (30) est réduite à une valeur plus faible que la pression d'air dans la deuxième trémie principale (130).

8. Système d'acheminement selon la revendication 7, **caractérisé en ce que** la deuxième source d'air comprimé comporte une zone d'étranglement (350) supplémentaire, qui est située entre le ventilateur (232) commun et l'admission d'air (41) du système de buses (39) de la deuxième trémie principale (130).

9. Système d'acheminement selon l'une quelconque des revendications 1 à 8, **caractérisé en ce que** le produit dans les trémies principales (30, 130) est guidé sous l'effet de la force de gravité vers les systèmes de buses (39).

10. Système d'acheminement selon l'une quelconque des revendications 1 à 9, **caractérisé en ce que** le système de buses (39) comporte une paroi latérale (46), orientée en amont, une paroi latérale (47) orientée en aval et un fond (48).

11. Système d'acheminement selon l'une quelconque des revendications 1 à 10, **caractérisé en ce que** la première unité de distribution (14a à 14d) et/ou la deuxième unité de distribution (14e à 14h) est réalisée sous forme d'ensemble semeur avec un dispositif de dosage (20) pour doser les semences et avec un ouvreur de sillon (22) pour creuser un sillon, dans lequel sont déposées les semences dosées, le dispositif de dosage (20) de l'ensemble semeur étant relié à la trémie principale (30, 130) correspondante par l'intermédiaire d'un tuyau flexible d'acheminement (42, 42a, 42b, 42c, 142, 142a, 142b, 142c) communiquant avec la sortie de produit (43) de la trémie principale (30, 130) correspondante.

12. Système d'acheminement selon la revendication 10 ou 11, **caractérisé en ce que** l'admission d'air (41) est reliée à la paroi latérale (46) orientée en amont et est agencée par rapport à la sortie de produit (43) de la trémie principale (30, 130) de telle sorte que le flux d'air circule à travers le système de buses (39) depuis l'admission d'air (41) vers la sortie de produit (43), de telle sorte que les semences, qui sont posées sur le fond (48) du système de buses (39), sont emportées par le flux d'air et sont guidées à travers le tuyau flexible d'acheminement (42, 42a, 42b, 42c, 142, 142a, 142b, 142c) vers le dispositif de dosage (20) de l'unité de distribution (14a à 14h).

13. Système d'acheminement selon l'une quelconque des revendications 1 à 12, **caractérisé en ce que** chaque unité de distribution (14a à 14h) est munie d'un réservoir secondaire (18), qui est monté entre la sortie de produit (43) et le dispositif de dosage (20).
